Europäisches Patentamt

European Patent Office

Office européen des brevets

(11) Numéro de publication : **0 373 184 B1**

(12) **FASCICULE DE BREVET EUROPEEN**

(45) Date de publication du fascicule du brevet :
**12.08.92 Bulletin 92/33**

(51) Int. Cl.⁵ : **F16B 21/04, G02C 5/22**

(21) Numéro de dépôt : **89902740.3**

(22) Date de dépôt : **10.03.89**

(86) Numéro de dépôt international :
**PCT/CH89/00043**

(87) Numéro de publication internationale :
**WO 89/08789 21.09.89 Gazette 89/23**

(54) **DISPOSITIF DE FIXATION D'UN TENON SUR LA PIECE QUI LE SUPPORTE.**

(30) Priorité : **10.03.88 CH 913/88**

(43) Date de publication de la demande :
**20.06.90 Bulletin 90/25**

(45) Mention de la délivrance du brevet :
**12.08.92 Bulletin 92/33**

(84) Etats contractants désignés :
**AT BE DE FR GB IT SE**

(56) Documents cités :
**EP-A- 0 086 691
EP-A- 0 239 767
CH-A- 449 460
FR-A- 2 596 116
US-A- 3 594 073**

(73) Titulaire : **ETABLISSEMENTS SARRAN S.A.
9, rue Wladimir Gagneur
F-39400 Morez (FR)**
Titulaire : **PETIGNAT, Maurice
27, rue du Bois-Noir
CH-2304 La Chaux-de-Fonds (CH)**

(72) Inventeur : **PETIGNAT, Maurice
27, rue du Bois-Noir
CH-2304 La Chaux-de-Fonds (CH)**
Inventeur : **FLEURY, Willy
16-18, rue du Manège
CH-2300 La Chaux-de-Fonds (CH)**

(74) Mandataire : **Robert, Jean S.
51, route du Prieur
CH-1257 Landecy (Genève) (CH)**

**Description**

La présente invention a pour objet un dispositif d'assemblage de deux pièces à l'aide d'un tenon qui les traverse, ce tenon présentant au moins un ergot radial, une desdites pièces présentant un passage pour ledit ergot et, sur sa face externe, un logement destiné à recevoir celui-ci, dans lequel l'ergot est maintenu par un dispositif élastique de rappel prenant appui d'une part sur ledit tenon et d'autre part, au moins indirectement, sur ladite pièce.

Il est à remarquer que des dispositions du genre de celle qui précède sont connues en soi. Ainsi, par exemple, CH-A-449.460 ou FR-A-2.596.116 décrivent une telle construction.

L'inconvénient de ces dispositions réside dans le fait que des trous dits "de forme" sont ménagés dans les deux éléments de l'assemblage, de tels trous étant beaucoup plus difficiles à réaliser que des trous circulaires; de plus elles nécessitent que l'engagement du tenon, dans les deux pièces, et non pas seulement dans l'une d'entre elles, s'effectue dans une position angulaire déterminée du tenon.

Le but de la présente invention est de simplifier une construction de ce genre grâce au fait que le trou de forme n'est ménagé que dans une seule des deux pièces à assembler, de même qu'à simplifier le montage puisque le tenon peut être engagé dans l'une des deux pièces dans toute position angulaire.

Ce but est atteint grâce au fait que, dans le dispositif d'assemblage suivant l'invention, le tenon est engagé dans au moins un manchon dont le rayon est au moins égal au rayon du tenon additionné de la longueur de l'ergot, la seconde pièce présentant un passage de section circulaire permettant l'engagement du tenon entouré dudit manchon, ce dernier jouant le rôle d'entretoise entre le tenon et la paroi dudit passage circulaire.

Le dessin représente, à titre d'exemple, une forme d'exécution du dispositif d'assemblage objet de l'invention, et des variantes.

La fig. 1 est une vue en perspective d'une partie de lunettes équipée du présent dispositif d'assemblage.

La fig. 2 est une coupe d'un détail de ce dispositif.

La fig. 3 est une coupe du présent dispositif appliqué à l'assemblage de deux panneaux.

La fig. 4 en est une vue en plan.

La fig. 5 est une vue en perspective d'un détail.

La fig. 6 est une vue en perspective d'un détail d'une variante d'application.

La fig. 7 est une coupe axiale d'une variante s'appliquant à la lunetterie, et

La fig. 8 est une vue en plan, de dessous, de cette variante.

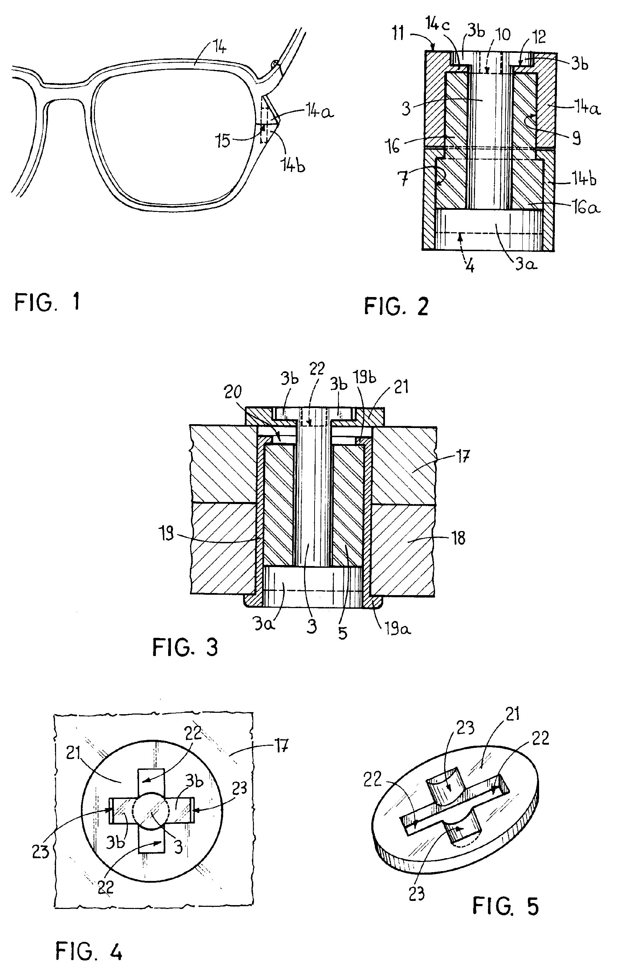

Le présent dispositif est utilisé, dans la forme d'exécution des figs. 1 et 2, pour réunir les deux parties, désignées par 14a et 14b de chaque élément annulaire, désigné par 14, de la partie faciale d'une monture de lunettes, entourant chacun des verres. Cet élément annulaire 14 étant fendu en 15, pour permettre de l'ouvrir et faciliter ainsi le montage et le démontage du verre, les deux parties 14a et 14b sont réunies au moyen du dispositif d'assemblage représenté en coupe à la fig. 2.

Ce dispositif comprend un tenon 3, en forme de tige cylindrique, présentant, à une de ses extrémités, une tête 3a munie d'une fente diamétrale 4 et, à son autre extrémité, deux ergots radiaux 3b diamétralement opposés. Ce tenon est engagé dans un manchon élastique 16, en caoutchouc. Le tenon 3 traverse les deux éléments 14a et 14b pour les maintenir assemblés l'un à l'autre. L'élément 14b reçoit la tête 3a, fendue en 4, du tenon 3, alors que l'élément 14a présente un fond, désigné par 14c, dans lequel sont ménagés des passages 10 ainsi que des creusures 12 servant de logements aux tétons 3b du tenon. Le tenon 3 muni de son manchon élastique traverse l'élément 14b qui présente un alésage 7 d'un diamètre correspondant à celui du manchon élastique. L'élément 14a présente un alésage 9 dont le diamètre correspond à celui du manchon 16, ce perçage présentant un fond 14c. Ce fond 14c sert d'appui au manchon élastique 16 qui, par ailleurs, prend appui contre la tête 3a du tenon. Ce fond 14c est percé de deux encoches 10, diamétralement opposées, destinées au passage des ergots 3b du tenon 3 et présente, sur sa face externe, désignée par 11, deux creusures 12, diamétralement opposées, formant des logements destinés à recevoir les ergots 3b. Le manchon élastique 16 présente une partie annulaire 16a qui vient occuper un espace annulaire, de façon que l'élasticité de cette partie 16a tende à presser l'une en direction de l'autre les parties 14a et 14b de l'élément annulaire 14 de la partie faciale de la monture des lunettes.

Le montage de ce dispositif s'effectue en engageant le manchon 16 sur le tenon 3, ce qui est possible malgré la présence des ergots 3b du fait de l'élasticité du manchon. Le tenon 3, muni du manchon 16, est introduit dans les deux éléments 14a et 14b dans une position angulaire telle que les ergots 3b se trouvent en regard des encoches 10 de la partie 14c de l'élément 14a. Cet engagement du tenon 3 s'effectue en comprimant le manchon élastique 16, jusqu'à ce que les ergots 3b soient situés au-delà de la face externe 11 de la partie 14c de l'élément 14a. A l'aide d'un tournevis engagé dans la fente 4 de la tête 3a, l'opérateur fait tourner le tenon 3 d'un quart de tour jusqu'à amener les ergots 3b en regard des creusures 12. La pression est alors relâchée et, le manchon 16 fonctionnant comme organe élastique de rappel, il engage les ergots 3b dans les deux creusures 12.

Le montage du dispositif d'assemblage est facilité par le fait que le tenon 3 peut être engagé dans l'élément 14b dans toute position angulaire, le rayon de l'alésage 7 de cet élément 14b étant supérieur au rayon du tenon additionné de la longueur de l'un ou l'autre de ses ergots 3b. Le manchon 16 joue le rôle d'entretoise entre le tenon 3 et la paroi de l'alésage 7 de l'élément 14b.

Le présent dispositif a l'avantage, dans cette application particulière, de permettre le montage des verres de lunettes sans risque que ceux-ci ne viennent à être cassés, comme c'est trop souvent le cas lorsque l'assemblage des parties des éléments annulaires de la face de la monture est assuré par une vis que l'opérateur peut facilement serrer exagérément. Le manchon élastique 16 jouera également le rôle d'amortisseur dans le cas où les éléments 14 de la monture viendraient à subir un choc.

La présente invention pourra être appliquée non seulement à la lunetterie mais à tous autres domaines de la technique, par exemple la menuiserie, l'aviation, les arts ménagers, la construction, etc.

C'est ainsi que, dans la variante des figures 3 à 5, le dispositif sert à l'assemblage de deux panneaux 17 et 18, en bois ou aggloméré, appliqués l'un contre l'autre. Ces deux panneaux sont traversés par une douille 19 présentant un rebord 19a en appui contre le panneau 18 et dont le fond, désigné par 19b, est percé d'une ouverture 20 permettant le passage d'un tenon 3 présentant une tête 3a et, à son extrémité opposée, deux ergots 3b. L'ouverture 20 du fond 19b de la douille 19 est suffisamment grande pour autoriser le passage des ergots 3b. Le manchon élastique 5 qui entoure le tenon, comme dans les autres exécutions, est engagé librement dans la douille 19, interposé entre le fond 19b de celle-ci et la tête 3a du tenon 3, à l'état légèrement comprimé. Les tenons 3b s'accrochent à une rondelle 21, représentée en perspective à la fig. 5, qui présente deux encoches diamétralement opposées 22, traversantes, pour le passage des ergots 3b, et deux creusures 23, également diamétralement opposées, qui reçoivent les ergots 3b qui s'y maintiennent sous l'effet de ressort que produit le manchon 5.

Il est à remarquer que la rondelle 21 munie de ses encoches 22 et de ses creusures 23 pourra être obtenue par frappe, en une opération de découpage-étampage.

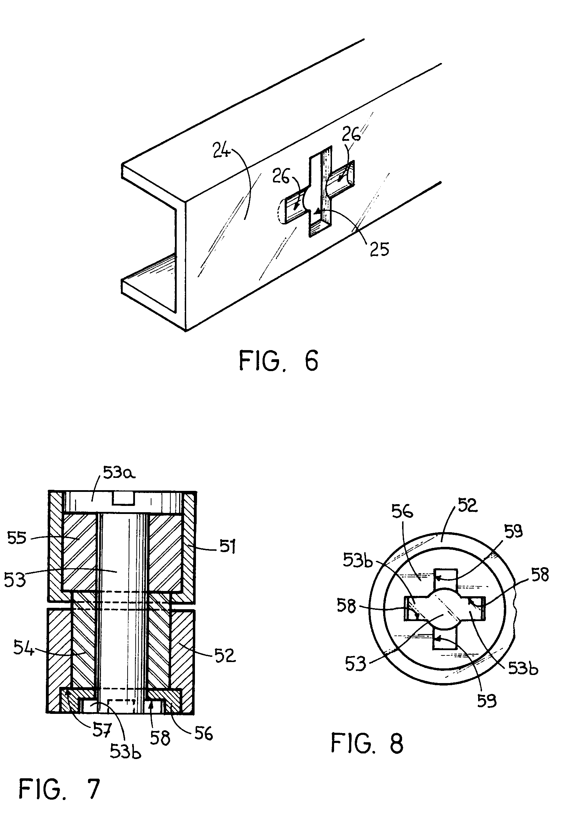

Il en est de même du profilé en U représenté à la fig. 6, désigné par 24, qui présente une ouverture traversante allongée 25 et, dirigées perpendiculairement à celle-ci, deux creusures 26 destinées à recevoir les ergots 3b d'un tenon 3 se fixant ainsi audit profilé 24 sous l'effet de rappel d'un dispositif élastique tel qu'un manchon de caoutchouc engagé sur lui.

La variante des figs. 7 et 8 s'applique, comme celle de la fig. 2, à la partie faciale d'une monture de lunettes et sert à réunir les deux éléments, désignés par 51 et 52, respectivement, de la partie entourant le verre afin de les serrer l'un contre l'autre et, de la sorte, de maintenir le verre en place.

Un tenon 53 est engagé dans deux manchons élastiquement déformables 54 et 55, superposés, logés le premier dans la partie 52 de la monture, avec pénétration dans la base de la partie 51 et, le deuxième, dans cette dernière. Une tête 53a du tenon 53 prend appui sur le manchon 55 alors qu'une rondelle 56 est logée dans un chambrage 57 que présente la partie 52 de la monture. Des ergots 53b que présente l'extrémité du tenon 53 reposent dans des creusures 58 de la rondelle 56, laquelle présente en outre des entrées 59 permettant l'engagement du tenon dans cette rondelle.

Grâce à l'élasticité des deux manchons 54 et 55, les deux parties 51 et 52 de la monture de lunettes sont rappelées l'une vers l'autre, enserrant ainsi élastiquement le verre des lunettes. Le démontage et le remontage sont aisés et peuvent s'effectuer sans risque que les verres ne soient cassés ou endommagés.

D'une façon générale, le tenon pourra ne présenter qu'un seul ergot, ou trois disposés à 120° les uns des autres. Le nombre des passages de la pièce à laquelle le tenon est fixé sera au moins égal à celui des ergots, de même que le nombre des creusures formant logements pour les ergots.

## Revendications

1. Dispositif d'assemblage de deux pièces à l'aide d'un tenon qui les traverse, ce tenon présentant au moins un ergot radial, une desdites pièces présentant un passage pour ledit ergot et, sur sa face externe, un logement destiné à recevoir celui-ci, dans lequel l'ergot est maintenu par un dispositif élastique de rappel prenant appui d'une part sur ledit tenon et d'autre part, au moins indirectement, sur ladite pièce, caractérisé par le fait que le tenon (3, 53) est engagé dans au moins un manchon (16, 5, 54-55) dont le rayon est au moins égal au rayon du tenon additionné de la longueur de l'ergot (3b, 53b), la seconde pièce (14b, 18, 51) présentant un passage de section circulaire permettant l'engagement du tenon entouré dudit manchon, ce dernier jouant le rôle d'entretoise entre le tenon et la paroi dudit passage circulaire.

2. Dispositif d'assemblage suivant la revendication 1, caractérisé par le fait que ledit manchon (16, 5, 54-55) est élastique et constitue ledit dispositif de rappel.

## Patentansprüche

1. Vorrichtung zum Zusammenbauen zweier Teile mit Hilfe eines sie durchsetzenden Zapfens, wobei der Zapfen zumindest einen radialen Fortsatz aufweist und einer der Teile einen Durchgang für dieses Fortsatz und auf seiner Außenseite eine Aufnahme um ihn aufzunehmen, aufweist, wobei der Fortsatz durch ein elastisches Haltemittel in ihr gehalten wird, das einerseits am Zapfen und andererseits zumindest indirekt auf diesen Teil drückt, dadurch gekennzeichnet, daß der Zapfen (3, 53) in zumindest eine Hülse (16, 5, 54-55) eingesteckt ist, deren Durchmesser zumindest gleich ist dem Durchmesser des Zapfens, vergrößert um die Länge des Fortsatzes (3b, 53b), wobei der zweite Teil (14b, 18, 51) einen Durchgang mit Kreisquerschnitt aufweist, der es erlaubt, den von der Hülse umgebenen Zapfen einzubringen, wobei die Hülse die Rolle des Zwischenstückes zwischen dem Zapfen und der Wand des kreisförmigen Durchganges spielt.

2. Zusammenbauvorrichtung nach Anspruch 1, dadurch gekennzeichnet, daß die Hülse (16, 5, 54-55) elastisch ist und das Haltemittel bildet.

## Claims

1. Assembling device of two members by means of a stub which passes therethrough, this stub being provided with at least one radial pin, one of the said members being provided with a passage for this pin and, on its outer face, with a recess intended to receive the latter, in which the pin is maintained by a return resilient device bearing on the one hand on the said stub and on the other hand, at least indirectly, on the said member, characterized by the fact that the stub (3, 53) is engaged in at least one sleeve (16, 5, 54-55) the radius of which is at least equal to the radius of the stub added with the length of the pin (3b, 53b), the second member (14b, 18, 51) presenting a passage of circular cross section permitting the engagement of the stub surrounded by the sleeve, the latter playing the play of a distance member between the stub and the wall of the said circular passage.

2. Assembling device according to claim 1, characterized by the fact that the said sleeve (16, 5, 54-55) is resilient and constitutes the said return device.

FIG. 1

FIG. 2

FIG. 3

FIG. 4

FIG. 5

FIG. 6

FIG. 7

FIG. 8